# EUROPÄISCHE PATENTSCHRIFT

(11) **EP 2 266 383 B1**
(45) Veröffentlichungstag und Bekanntmachung des Hinweises auf die Patenterteilung: **21.11.2012**
(21) Anmeldenummer: 10164559.6
(22) Anmeldetag: 01.06.2010
(51) Int. Cl.: A01D 43/073

(54) **Steueranordnung zur Kontrolle des Überladens landwirtschaftlichen Ernteguts von einer Erntemaschine auf ein einen Ladebehälter umfassendes Transportfahrzeug**
Control assembly for controlling the transfer of harvested agricultural goods from a harvester to a transport vehicle with a loading container
Dispositif de commande pour le contrôle du transfert de récoltes agricoles d'une moissonneuse sur un véhicule de transport comportant un récipient de chargement

(30) Priorität: 26.06.2009 DE 102009027245
(43) Veröffentlichungstag der Anmeldung: 29.12.2010
(73) Patentinhaber: Deere & Company, Moline, IL 61265-8098 (US)
(72) Erfinder: Kormann, Dr. Georg, 66482 Zweibrücken (DE)
(74) Vertreter: Holst, Sönke

(56) Entgegenhaltungen:
- EP-A1- 1 645 178
- EP-A2- 1 219 153
- WO-A1-03/101178

## Beschreibung

Die Erfindung betrifft eine Steueranordnung zur Kontrolle des Überladens landwirtschaftlichen Ernteguts von einer Erntemaschine auf ein einen Ladebehälter umfassendes Transportfahrzeug, wobei die Steueranordnung betreibbar ist, basierend auf Signalen von einer den Füllstand und/oder die äußeren Konturen des Ladebehälters erfassenden Sensoranordnung die Position des Abgabeendes einer Austrageinrichtung gegenüber der Erntemaschine und/oder die Auswurfrichtung der Austrageinrichtung und/oder die Position des Transportfahrzeugs mit dem Ladebehälter gegenüber der Erntemaschine selbsttätig derart zu kontrollieren, dass der Ladebehälter sukzessive mit dem Erntegut befüllt wird.

### Stand der Technik

Bei der Ernte von landwirtschaftlichen Gütern auf einem Feld ist es gängige Praxis, dass eine Erntemaschine ein neben der Erntemaschine herfahrendes Transportfahrzeug mit geerntetem Gut belädt. Ein Ladebehälter des Transportfahrzeugs, bei dem es sich beispielsweise um einen Schlepper mit Anhänger oder einen Lastwagen handelt, wird während der Fahrt durch eine Austrageinrichtung der Erntemaschine mit dem geernteten Gut beladen, beispielsweise bei einem Feldhäcksler durch einen Auswurfkrümmer und bei einem Mähdrescher durch ein Abtankrohr. Die Austrageinrichtung ist in der Regel um eine vertikale Achse drehbar an der Erntemaschine befestigt und zwischen einer Ruhestellung, in der sie etwa parallel zur Längsachse der Erntemaschine orientiert ist, und einer Arbeitsposition, in der sie sich quer zur Fahrtrichtung der Erntemaschine erstreckt, verschwenkbar. Zusätzlich kann die Höhe des abgabeseitigen Endes der Austrageinrichtung variierbar sein, wie auch die Position einer Auswurfklappe, welche den Winkel definiert, unter dem das geerntete Gut abgegeben wird.

Bei verstellbaren Austrageinrichtungen, wie sie üblicherweise an Feldhäckslern verwendet werden, wird die Position der Austrageinrichtung im einfachsten Fall manuell durch den Fahrer der Erntemaschine gesteuert, wozu ihm Eingabeeinrichtungen in der Kabine zur Verfügung stehen, die zur Verstellung der Austrageinrichtung dienende Aktoren ansteuern. Dabei hat der Fahrer der Erntemaschine Sorge zu tragen, dass der gesamte Ladebehälter des Transportfahrzeugs hinreichend befüllt wird, was durch sukzessives Ausrichten der Austrageinrichtung auf unterschiedliche Punkte auf dem Ladebehälter hin erfolgt. Sollte das Transportfahrzeug nach vorn oder hinten oder zur Seite hin von seiner Sollposition abweichen, ist die Position der Austrageinrichtung manuell nachzustellen. Außerdem muss der Fahrer der Erntemaschine den Füllstand des Ladebehälters beachten und einen Wechsel des Transportfahrzeugs veranlassen, wenn der Ladebehälter hinreichend gefüllt ist. Das erfolgt zum Beispiel in der Weise, dass der Fahrer des Transportfahrzeugs auf ein Handzeichen oder anderes Signal des Fahrers der Erntemaschine hin (oder von sich aus, wenn er erkennen kann, dass der Ladebehälter gefüllt ist) die Geschwindigkeit vermindert und ein anderes Transportfahrzeug neben die Erntemaschine fährt und dann die Austrageinrichtung auf den Ladebehälter des anderen Transportfahrzeugs gerichtet wird, wobei zwischenzeitlich Erntegut auf den Boden fällt und der Produktionskette verloren geht, oder dass zwei Transportfahrzeuge neben der Erntemaschine herfahren und der Fahrer der Erntemaschine bei hinreichend gefülltem Ladebehälter des ersten Transportfahrzeugs, das in der Regel neben der Erntemaschine herfährt, die Austrageinrichtung auf den Ladebehälter des zweiten Transportfahrzeugs richtet, das neben dem ersten Transportfahrzeug herfährt. Das erste Transportfahrzeug vermindert dann seine Geschwindigkeit, dreht ab, und das zweite Transportfahrzeug fährt dann direkt neben der Erntemaschine her. Hierbei ist als nachteilig anzusehen, dass die Steuerung der Position der Austrageinrichtung und das Beobachten des Füllstands des Ladebehälters einen beträchtlichen Teil der Aufmerksamkeit des Fahrers in Anspruch nimmt, was zu einer ermüdenden Arbeit führt. Der Wechsel der Austrageinrichtung auf das zweite Transportfahrzeug ist eine schwierige Operation, die viel Erfahrung und Fingerspitzengefühl erfordert, wenn nicht viel Erntegut verloren gehen soll.

Die DE 44 03 893 A1 beschreibt einen Feldhäcksler mit einer Austrageinrichtung, an deren abgabeseitigem Ende ein Entfernungsmesser angebracht ist, der die Höhe des Ernteguts im Ladebehälter erfasst. Sobald das Erntegut eine vorgegebene Höhe erreicht hat, wird die Austrageinrichtung verstellt, bis der gesamte Ladebehälter gefüllt ist. Hier findet eine den Fahrer der Erntemaschine weitgehend entlastende Automatisierung statt, die allerdings weiterhin eine manuelle Ausrichtung der Austrageinrichtung auf das zweite Transportfahrzeug erfordert, wenn der Ladebehälter des ersten Transportfahrzeugs gefüllt ist.

In der EP 1 219 153 A2 wurde vorgeschlagen, den Ladebehälter selbsttätig oder manuell gegenüber der Erntemaschine in eine Position zu verbringen, in der er befüllt werden kann.

Bei starren Austrageinrichtungen (Mähdrescher) wird mittels einer Datenfernübertragungseinrichtung eine Positionsinformation der Austrageinrichtung auf das Transportfahrzeug übertragen und die Position des Transportfahrzeugs angepasst, während bewegliche Austrageinrichtungen (Feldhäcksler) basierend auf Daten hinsichtlich der Position des Ladebehälters und ihrer eigenen Position selbsttätig in eine Position verbracht werden, in der sie den Ladebehälter befüllen. Wenn der Fahrer erkennt, dass ein Bereich des Ladebehälters hinreichend mit Erntegut beaufschlagt wurde und nunmehr ein anderer Bereich zu befüllen ist, wird die Position der Austrageinrichtung manuell durch den Fahrer der Erntemaschine verändert. Reicht der Bewegungsbereich der Austrageinrichtung nicht mehr hin, um noch nicht hinreichend gefüllte Bereiche des Ladebehälters zu erreichen, wird selbsttätig die relative Position des Transportfahrzeugs zur Erntemaschine verändert, was auch gegensinnig zur Austrageinrichtung erfolgen kann. Wenn der Ladebehälter eines ersten Transportfahrzeugs gefüllt ist, veranlasst der Bediener den Wechsel des Transportfahrzeugs oder es wird ein automatischer Wechsel des Transportfahrzeugs basierend auf einer überladenen Materialmenge veranlasst. Demnach wird die Austrageinrichtung selbsttätig konstant auf eine bestimmte Position auf dem Ladebehälter ausgerichtet. Der Fahrer der Erntemaschine wird aber nicht von der Aufgabe entlastet, den sich ansammelnden Schüttgutkegel des Ernteguts auf dem Ladebehälter zu beobachten, und ggf. die Austrageinrichtung in eine neue Stellung zu verbringen, wenn der Schüttgutkegel zu sehr anwächst.

Die EP 20 20 174 A1 beschreibt einen Feldhäcksler mit einer am äußeren Ende der Austrageinrichtung angebrachten Kamera, die charakteristische Parameter der Austrageinrichtung und der Erntemaschine und/oder des Transportfahrzeugs erfasst. Die Kamera kann auch zur Entfernungsmessung ausgelegt sein und den Füllstand des Ladebehälters erfassen. Die Signale der Kamera werden verwendet, um die Position der Austrageinrichtung und/oder des Transportfahrzeugs gegenüber der Erntemaschine selbsttätig derart anzusteuern, dass der Ladebehälter selbsttätig befüllt wird. Hinsichtlich des Wechsels der Austrageinrichtung auf einen Ladebehälter eines zweiten Transportfahrzeugs liegen die bezüglich der DE 44 03 893 A1 erwähnten Nachteile vor.

Die DE 10 2007 009 666 A1 beschreibt eine Anordnung zum Befüllen eines Behälters mit Schüttgut, die insbesondere an einem Feldhäcksler verwendet wird und bei der eine Messeinrichtung dreidimensionale Bilder von der Oberfläche des Schüttguts im Behälter erzeugt. Die Messeinrichtung kann auch einen zweiten Behälter optisch erfassen und generiert Steuerbefehle für das Zugfahrzeug des zweiten Behälters oder dessen Fahrer, um in Verbindung mit der Positionierung der Ausflussöffnung des Feldhäckslers die Behälter bei weitestgehend minimierten Verlusten an Erntegut auszuwechseln.

Der Artikel "Entwicklung modellbasierter Beladungsstrategien für landwirtschaftliche Überladeprozesse" von G. Happich et al., VDI-Berichte Nr. 2045, 2008, Seiten 289 bis 294 beschreibt eine selbsttätige Überladung von Erntegut von einem Feldhäcksler auf einen Anhänger, bei dem die

Position der Austrageinrichtung basierend auf den Positionen des Feldhäckslers und des Ladebehälters gesteuert wird und die Austrageinrichtung nach Erreichen eines auf einer Erfassung des jeweiligen Durchsatzes und modellbasierten Rechnungen basierenden Füllstandes auf eine andere Stelle des Behälters ausgerichtet wird.

### Aufgabe der Erfindung

Die der Erfindung zu Grunde liegende Aufgabe wird darin gesehen, eine Steueranordnung zur Kontrolle des Überladens landwirtschaftlichen Ernteguts von einer Erntemaschine auf ein einen Ladebehälter umfassendes Transportfahrzeug bereitzustellen, die einerseits in der Lage ist, die Position des Abgabeendes der Austrageinrichtung und/oder die Auswurfrichtung der Austrageinrichtung und/oder die Position des Transportfahrzeugs mit dem Ladebehälter gegenüber der Erntemaschine selbsttätig derart zu kontrollieren, dass der Ladebehälter vorzugsweise nach einer geeigneten Beladestrategie mit dem Erntegut befüllt wird, und andererseits auch die Möglichkeit bietet, die Austrageinrichtung selbsttätig auf den Ladebehälter eines zweiten Transportfahrzeugs auszurichten, wenn der Ladebehälter eines ersten Transportfahrzeugs gefüllt ist.

### Lösung

Diese Aufgabe wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Eine Steueranordnung dient zur Kontrolle des Überladens landwirtschaftlichen Ernteguts von einer Austrageinrichtung einer selbstfahrenden oder angebauten oder gezogenen Erntemaschine auf den Ladebehälter eines Transportfahrzeugs. Die Steueranordnung beeinflusst während des Erntebetriebs basierend auf Signalen von einer den Füllstand und/oder die äußeren Konturen des Ladebehälters erfassenden Sensoranordnung die Position des Abgabeendes der Austrageinrichtung und/oder die Auswurfrichtung der Austrageinrichtung und/oder die Position des Transportfahrzeugs gegenüber der Erntemaschine. Letzteres erfolgt, indem die Steueranordnung Lenk- und/oder Geschwindigkeitssignale an eine Lenk- bzw. Geschwindigkeitsvorgabeeinrichtung des Transportfahrzeugs oder eine geeignete Anzeige bzw. einen Lautsprecher auf dem Transportfahrzeug übersendet, anhand welcher der Fahrer des Transportfahrzeug letzteres lenkt bzw. dessen Geschwindigkeit kontrolliert. Dabei wird das Erntegut durch die Steueranordnung vorzugsweise selbsttätig gemäß einer Beladestrategie sukzessive an unterschiedlichen Stellen des Ladebehälters abgelegt.

Die Sensoranordnung erfasst nicht nur den Füllstand bzw. die Konturen des Ladebehälters, sondern ist auch in der Lage, die Position eines zweiten Ladebehälters zu erfassen, insofern er sich in hinreichender Nähe zur Erntemaschine befindet. Der zweite Ladebehälter kann von einem zweiten Transportfahrzeug oder vom ersten Transportfahrzeug über das Feld bewegt werden. Sobald erkannt wird, dass der erste Ladebehälter einen vorbestimmten, gewünschten Füllstand erreicht hat, richtet die Steueranordnung die Austrageinrichtung selbsttätig auf den zweiten Ladebehälter aus, wozu sie die Signale der Sensoranordnung verwendet. Das erste Transportfahrzeug wird nunmehr durch dessen Fahrer (selbständig, nachdem er das Überschwenken der Austrageinrichtung auf den zweiten Ladebehälter erkannt hat, oder durch die Steueranordnung direkt über die Lenk- bzw. Geschwindigkeitsvorgabeeinrichtung des Transportfahrzeugs oder geeignete Anweisungen über die Anzeige oder den Lautsprecher veranlasst) verlangsamt und verlässt die Erntemaschine, um das Erntegut zu einem Sammelplatz zu verbringen, während das zweite Transportfahrzeug die Position einnimmt, die zuvor das erste Transportfahrzeug eingenommen hat, d. h. in der Regel an der Seite der Erntemaschine. Wenn das erste Transportfahrzeug auch den zweiten Ladebehälter zieht oder trägt, fährt es in eine Position, in welcher der zweite Ladebehälter unproblematisch befüllt werden kann; in der Regel zieht es etwas vor, nachdem der erste Ladebehälter gefüllt wurde, der vor dem zweiten Ladebehälter hergezogen wird. Der zweite Ladebehälter wird anschließend in der Weise befüllt, in welcher zuvor der erste Ladebehälter befüllt wurde. Dieser Vorgang wird wiederholt, wenn der zweite Ladebehälter gefüllt ist und die Austrageinrichtung auf einen dritten Ladebehälter eines dritten (wenn ein Transportfahrzeug je einen Ladebehälter zieht oder trägt) oder zweiten (wenn ein Transportfahrzeug je zwei Ladebehälter zieht oder trägt) Transportfahrzeugs gerichtet wird.

Der Füllstand des ersten Ladebehälters wird, wie bereits erwähnt, durch die Sensoranordnung erfasst, die ihn dazu verwendet, eine andere Stelle im Ladebehälter mit Erntegut zu beaufschlagen, wenn der Füllstand an einer Stelle eine bestimmte Höhe erreicht hat, wie in der DE 44 03 893 A1 und der EP 20 20 174 A1 beschrieben wird, deren Offenbarungen durch Verweis mit in die vorliegenden Unterlagen aufgenommen werden. Die Signale der Sensoranordnung dienen auch zur Erkennung eines insgesamt hinreichend gefüllten ersten Ladebehälters, um den Wechsel der Austrageinrichtung auf den zweiten Ladebehälter auszulösen. Alternativ oder zusätzlich wird der gefüllte erste Ladebehälter anhand eines an der Erntemaschine angebrachten Erntegutsensors zur Erfassung von Eigenschaften des Ernteguts erkannt. Der Erntegutsensor kann beispielsweise den Durchsatz, die Masse, Inhaltsstoffe und/oder die Trockenmasse des Erntegutes erfassen. Die mit dem Erntegutsensor erfassten Eigenschaften des Ernteguts werden über die Zeit hochintegriert und mit einem Sollwert verglichen, der von der Beschaffenheit (Größe, Art etc.) des Ladebehälters abhängen kann. Hierzu und zu verwendbaren Beladestrategien wird auf die Offenbarung der DE 10 2008 002 006 A1 verwiesen, deren Offenbarung durch Verweis mit in die vorliegenden Unterlagen aufgenommen wird.

Die Steueranordnung überprüft nach einer Erkennung eines insgesamt hinreichend gefüllten ersten Ladebehälters die Signale der Sensoranordnung daraufhin, ob ein zweiter Ladebehälter von der der Sensoranordnung erfasst wird und hält die Erntemaschine an, wenn das nicht der Fall ist, um auf das zweite Transportfahrzeug mit dem zweiten Ladebehälter zu warten.

Die Sensoranordnung umfasst vorzugsweise einen abbildenden Sensor, insbesondere eine zweidimensional arbeitende Kamera, die in Kombination mit einem berührungslos, beispielsweise auf Laufzeitmessung mit optischen oder akustischen Wellen beruhenden Entfernungsmesser verwendet werden kann, um Entfernungswerte zur Bestimmung der Füllhöhe des Ladebehälters zu gewinnen. Es kann auch eine dreidimensional arbeitende Kamera verwendet werden, die als so genannter Photonenmischer (Photon Mixer Device) ausgeführt werden kann. Zusätzlich oder alternativ wird ein Entfemungssensor, insbesondere ein Laser-Entfernungsmesser verwendet, der die zu untersuchende Fläche in zwei Dimensionen abtastet, wozu auf die Offenbarung der DE 10 2008 015 277 A1 verwiesen wird, deren Offenbarung durch Verweis mit in die vorliegenden Unterlagen aufgenommen wird. Zweckmäßigerweise blickt die Sensoranordnung von oben her auf die Ladebehälter. Sie kann am äußeren Ende der Austrageinrichtung oder an einer separaten Halterung an der Erntemaschine in einer geeigneten Höhe befestigt sein.

Der Wechsel der Austrageinrichtung vom ersten Ladebehälter auf den zweiten Ladebehälter kann erfolgen, während die Fahrt der Erntemaschine und der Transportfahrzeuge fortgesetzt wird, oder die Erntemaschine hält auf Veranlassung der Steueranordnung an, bevor die Austrageinrichtung vom ersten Ladebehälter auf den zweiten Ladebehälter überwechselt. Die Transportfahrzeuge halten ebenfalls an, oder das erste Transportfahrzeug fährt ab, während das zweite Transportfahrzeug mit dem zweiten Ladebehälter die Position einnimmt, die vorher der erste Ladebehälter hatte (wenn die Ladebehälter sich an unterschiedlichen Transportfahrzeugen befinden) bzw. das erste Transportfahrzeug fährt etwas vor, um den auch von ihm gezogenen zweiten Ladebehälters neben der Erntemaschine zu positionieren. Bei diesen Ausführungsformen kann die Steuereinrichtung direkt die Geschwindigkeiten der Erntemaschine und der Transportfahrzeuge bestimmen oder entsprechende Anweisungen an ihre Fahrer geben.

Bei einer bevorzugten Ausführungsform der Erfindung kontrolliert die Steueranordnung die Position des zweiten Transportfahrzeugs mit dem Ladebehälter gegenüber der Erntemaschine über eine Lenk- bzw. Geschwindigkeitsvorgabeeinrichtung des zweiten Transportfahrzeugs selbsttätig, um es nach dem Abdrehen des ersten Transportfahrzeugs in eine zum Überladen des Ernteguts geeignete Position zu verbringen. Es besteht aber auch die Möglichkeit, über eine Anzeige oder einen Lautsprecher entsprechende Anweisungen an den Fahrer des zweiten Transportfahrzeugs zu geben.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer selbstfahrenden Erntemaschine und zweier Transportfahrzeuge,
- Fig. 2: eine schematische Draufsicht auf die Erntemaschine und die Transportfahrzeuge, die gemeinsam auf einem Feld einen Ernte- und Überladevorgang durchführen, wobei das Erntegut auf den Ladebehälter des ersten Transportfahrzeugs überladen wird,
- Fig. 3: eine rückwärtige Ansicht auf der Erntemaschine und der Transportfahrzeuge aus Figur 2,
- Fig. 4: eine schematische Darstellung der Positionsbestimmungseinrichtungen der beiden Fahrzeuge und der Steueranordnung zur Kontrolle des Überladens des Ernteguts, und
- Fig. 5: ein Flussdiagramm, nach dem die Steueranordnung arbeitet.

Eine in der Figur 1 dargestellte Kombination dreier landwirtschaftlicher Maschinen umfasst eine Erntemaschine 10 in der Art eines selbstfahrenden Feldhäckslers, ein erstes Transportfahrzeug 12 in der Art eines selbstfahrenden Traktors, der mittels einer Deichsel 14 einen Anhänger 16 zieht, der einen Ladebehälter 18 umfasst, und ein zweites Transportfahrzeug 12' in der Art eines selbstfahrenden Traktors, der mittels einer Deichsel 14' einen Anhänger 16' zieht, der einen Ladebehälter 18' umfasst.

Die Erntemaschine 10 baut sich auf einem Rahmen 20 auf, der von vorderen angetriebenen Rädern 22 und lenkbaren rückwärtigen Rädern 24 getragen wird. Die Bedienung der Erntemaschine 10 erfolgt von einer Fahrerkabine 26 aus, von der aus ein Erntevorsatz 28 in Form eines Maismähvorsatzes sichtbar ist, der an einem Einzugskanal 30 an der Frontseite der Erntemaschine 10 befestigt ist. Mittels des Erntevorsatzes 28 von einem Feld 34 aufgenommenes Erntegut wird über einen im Einzugskanal 30 angeordneten Einzugsförderer mit Vorpresswalzen einer Häckseltrommel 36 zugeführt, die es in kleine Stücke häckselt und es einem Gebläse 38 aufgibt. Zwischen der Häckseltrommel 36 und dem Gebläse 38 erstreckt sich eine Nachzerkleinerungsvorrichtung 42 mit zwei Körnerprozessorwalzen. Der Antrieb der erwähnten, antreibbaren Aggregate der Erntemaschine 10 und des Erntevorsatzes 28 erfolgt mittels eines Verbrennungsmotors 44. Das vom Gebläse 38 abgegebene Gut verlässt die Erntemaschine 10 zu dem nebenher fahrenden Ladebehälter 18 über eine mittels eines ersten, fremdkraftbetätigten Aktors 46 um eine etwa vertikale Achse drehbaren und mittels eines zweiten, fremdkraftbetätigten Aktors 48 in der Neigung verstellbare Austrageinrichtung 40 in Form eines Auswurfkrümmers, deren Abwurfrichtung durch eine Klappe 50 veränderbar ist, deren Neigung mittels eines dritten, fremdkraftbetätigten Aktors 52 verstellbar ist. In der Figur 1 ist die Austrageinrichtung 40 in ihrer Ruhestellung dargestellt, in die sie beispielsweise verbracht wird, wenn die Erntemaschine 10 auf einer Straße fährt. Beim Erntevorgang wird die Austrageinrichtung 40 mittels des Aktors 48 angehoben und mittels des Aktors 46 entweder an eine Seite der Erntemaschine 10 gedreht, wenn nach dem Anmähen hinreichend Platz seitlich der Erntemaschine 10 für das Transportfahrzeug 12 auf einem abgeernteten Bereich 56 des Feldes vorhanden ist, oder sie verbleibt in der nach hinten ausgerichteten Stellung gemäß Figur 1, wenn zunächst eine Gasse in das Feld geschnitten wird.

Die Transportfahrzeuge 12, 12' und die Anhänger 16, 16' sind konventionellen Aufbaus. Die Transportfahrzeuge 12, 12' umfassen jeweils vordere lenkbare Räder 64 und rückwärtige angetriebene Räder 66, die an einem Rahmen 68 abgestützt sind, der eine Fahrerkabine 70 trägt.

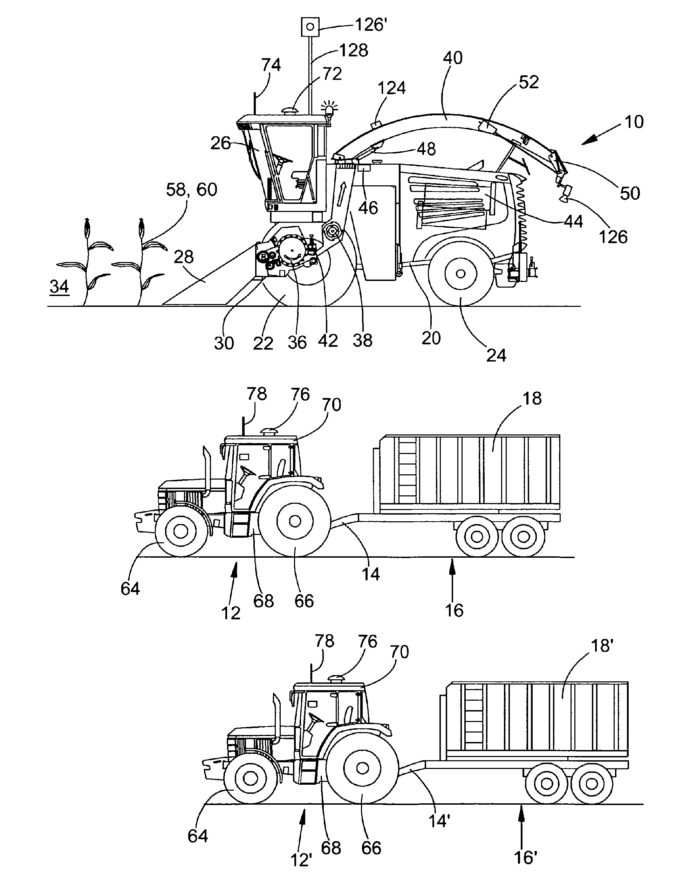

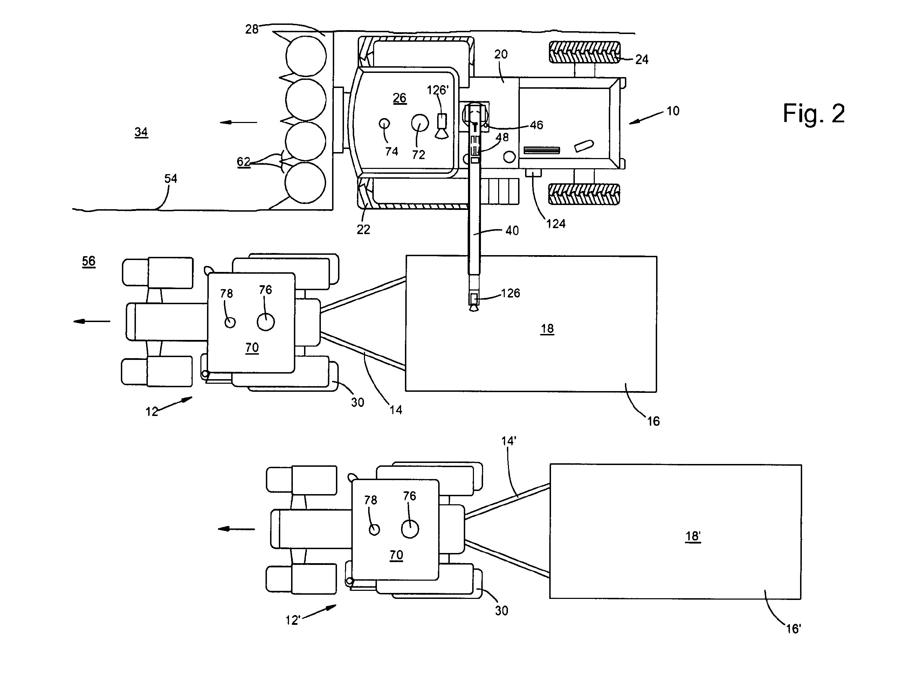

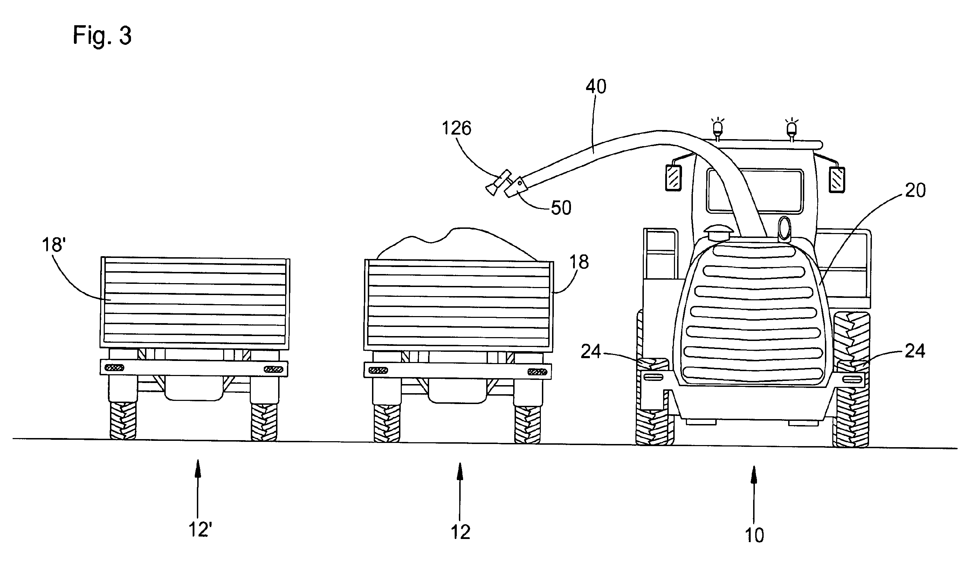

In der Figur 2 sind die Erntemaschine 10 und die Transportfahrzeuge 12, 12' in einer Draufsicht wiedergegeben. Es ist erkennbar, dass die Erntemaschine 10 entlang einer Erntegutkante 54 fährt, die eine Grenze zwischen dem abgeernteten Bereich 56 des Felds 34 und dem noch stehenden, mit Maispflanzen 58 besetzten Bestand 60 des Felds 34 darstellt, und die die Pflanzen 58 aberntet. Das erste Transportfahrzeug 12 fährt auf dem abgeernteten Teil 56 des Felds parallel zur Erntemaschine 10 entlang eines Weges, auf dem die von der Erntemaschine 10 gehäckselten Pflanzen durch die Austrageinrichtung 40 in den ersten Ladebehälter 18 gelangen. Das Transportfahrzeug 12 muss daher stets parallel neben der Erntemaschine 10 herfahren; wie oben erwähnt, kann das Transportfahrzeug 12 insbesondere beim Einfahren in das Feld aber auch hinter der Erntemaschine 10 herfahren, da noch kein abgeernteter Teil 56 des Feldes 34 vorliegt, auf dem das Transportfahrzeug 12 fahren könnte, ohne die dort stehenden Pflanzen zu beschädigen. Während der erste Ladebehälter 18 des ersten Transportfahrzeugs 12 befüllt wird, fährt das zweite Transportfahrzeug 12' an der von der Erntemaschine 10 abgewandten Seite des ersten Transportfahrzeugs 12 entlang und wartet auf seinen Einsatz. In der Figur 3 ist eine rückwärtige Ansicht der in Figur 2 dargestellten Situation dargestellt.

Die Erntemaschine 10 wird durch einen in der Fahrerkabine 18 sitzenden Fahrer oder durch eine an sich bekannte, selbsttätig arbeitende Lenkvorrichtung gelenkt. Das Transportfahrzeug 12 ist ebenfalls mit einer im Folgenden näher beschriebenen Lenkeinrichtung ausgestattet, um das Parallelfahren zur Erntemaschine 10 zu erleichtern bzw. automatisieren. Die Erntemaschine 10 könnte auch eine beliebige andere selbstfahrende Erntemaschine sein, wie ein Mähdrescher oder Rübenernter.

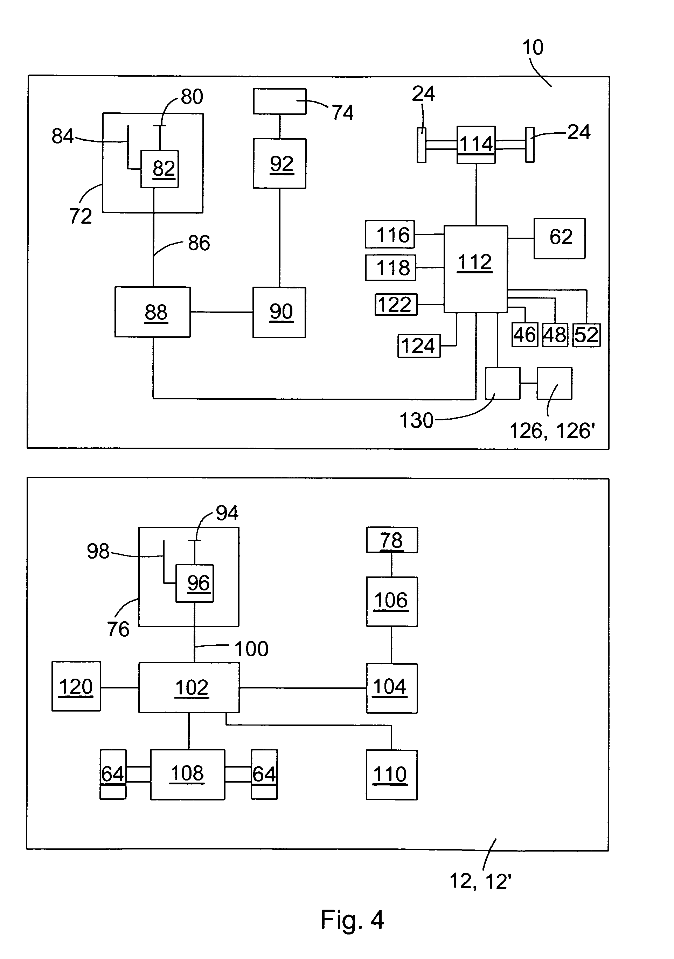

Die Erntemaschine 10 ist mit einer ersten Positionsbestimmungseinrichtung 72 ausgestattet, die sich auf dem Dach der Kabine 26 befindet. Dort ist auch eine erste Radioantenne 74 positioniert. Das erste Transportfahrzeug 12 ist mit einer zweiten Positionsbestimmungseinrichtung 76 ausgestattet, die sich auf dem Dach der Kabine 70 befindet. Dort ist auch eine zweite Radioantenne 78 positioniert. Das zweite Transportfahrzeug 12' ist mit einer zweiten Positionsbestimmungseinrichtung 76 ausgestattet, die sich auf dem Dach der Kabine 70 befindet. Dort ist auch eine zweite Radioantenne 78 positioniert. Außerdem ist die Erntemaschine 10 mit einer Sensoranordnung 126 ausgestattet, die am äußeren Ende der Überladeeinrichtung 40 angebracht ist und zum Erfassen der Konturen der Ladebehälter 18, 18' und/oder ihres Füllstandes mit Erntegut dienen. Alternativ oder zusätzlich ist eine Sensoranordnung 126' oberhalb des Daches der Kabine 26 auf einer teleskopierbaren Halterung 128 befestigt, die beim Erntebetrieb in ihre ausgefahrene Stellung verbracht wird, wie sie in der Figur 1 dargestellt ist, und ansonsten abgesenkt ist. Die Sensoranordnungen 126, 126' können ihr auf die Ladebehälter 18, 18' gerichtetes Gesichtsfeld zweidimensional abtastende Ultraschall oder Laser-Entfernungsmesser sein, oder es handelt sich um eine dreidimensional arbeitende (PMD-) Kamera, oder zwei Kameras, die ein Stereobild erzeugen, oder um eine zweidimensional arbeitende Kamera, die mit einem das Gesichtsfeld abtastenden Entfernungsmesser kombiniert ist. Das Ausgangssignal der Sensoranordnungen 126 und/oder 126' wird durch eine Verarbeitungsschaltung 130 (vgl. Figur 4) verarbeitet.

Nunmehr wird auf die Figur 4 Bezug genommen, in der die einzelnen Komponenten der Steueranordnung zur Kontrolle des Überladens des Ernteguts von der Erntemaschine 10 auf die

Ladebehälter 18, 18' einschließlich der Sensoranordnungen 126, 126' sowie der Positionsbestimmungseinrichtungen 72, 76 und der Lenkeinrichtungen der Transportfahrzeuge 12, 12' und der Erntemaschine 10 schematisch dargestellt sind. An Bord der Erntemaschine 10 befindet sich die erste Positionsbestimmungseinrichtung 72, die eine Antenne 80 und eine mit der Antenne 80 verbundene Auswertungsschaltung 82 umfasst. Die Antenne 80 empfängt Signale von Satelliten eines Positionsbestimmungssystems, wie GPS, Galileo oder Glonass, die der Auswertungsschaltung 82 zugeführt werden. Anhand der Signale der Satelliten bestimmt die Auswertungsschaltung 82 die aktuelle Position der Antenne 80. Die Auswertungsschaltung 82 ist weiterhin mit einer Korrekturdatenempfangsantenne 84 verbunden, die von Referenzstationen an bekannten Standorten ausgestrahlte Radiowellen empfängt. Anhand der Radiowellen werden von der Auswertungsschaltung 82 Korrekturdaten zur Verbesserung der Genauigkeit der Positionsbestimmungseinrichtung 72 erzeugt.

Die Auswertungsschaltung 82 übersendet durch eine Busleitung 86 ihre Positionsdaten an eine Rechnereinrichtung 88. Die Rechnereinrichtung 88 ist über eine Schnittstelle 90 mit einer Empfangs- und Sendeeinrichtung 92 verbunden, die wiederum mit der Radioantenne 74 verbunden ist. Die Empfangs- und Sendeeinrichtung 92 empfängt und erzeugt Radiowellen, die von der Antenne 74 aufgenommen bzw. abgestrahlt werden.

Analog befindet sich an Bord der Transportfahrzeuge 12, 12' jeweils eine zweite Positionsbestimmungseinrichtung 76, die eine Antenne 94 und eine mit der Antenne 94 verbundene Auswertungsschaltung 96 umfasst. Die Antenne 94 empfängt Signale von Satelliten desselben Positionsbestimmungssystems wie die Antenne 80, die der Auswertungsschaltung 96 zugeführt werden. Anhand der Signale der Satelliten bestimmt die Auswertungsschaltung 96 die aktuelle Position der Antenne 94. Die Auswertungsschaltung 96 ist weiterhin mit einer Korrekturdatenempfangsantenne 98 verbunden, die von Referenzstationen an bekannten Standorten ausgestrahlte Radiowellen empfängt. Anhand der Radiowellen werden von der Auswertungsschaltung 96 Korrekturdaten zur Verbesserung der Genauigkeit der Positionsbestimmungseinrichtung 76 erzeugt.

Die Auswertungsschaltung 96 übersendet durch eine Busleitung 100 ihre Positionsdaten an eine Rechnereinrichtung 102. Die Rechnereinrichtung 102 ist über eine Schnittstelle 104 mit einer Empfangs- und Sendeeinrichtung 106 verbunden, die wiederum mit der Radioantenne 78 verbunden ist. Die Empfangs- und Sendeeinrichtung 106 empfängt und erzeugt Radiowellen, die von der Antenne 78 aufgenommen bzw. abgestrahlt werden. Durch die Empfangs- und Sendeeinrichtungen 90, 106 und die Radioantennen 74, 78 können Daten von der Rechnereinrichtung 88 an die Rechnereinrichtung 102 und umgekehrt übermittelt werden. Die Verbindung zwischen den Radioantennen 74, 78 kann direkt sein, z. B. in einem zugelassenen Funkbereich wie CB-Funk o. ä., oder über eine oder mehrere Relaisstationen bereitgestellt werden, beispielsweise wenn die Empfangs- und Sendeeinrichtungen 90, 106 und die Radioantennen 74, 78 nach dem GSM-Standard oder einem anderen geeigneten Standard für Mobiltelefone arbeiten.

Die Rechnereinrichtung 102 ist mit einer Lenkeinrichtung 108 verbunden, welche den Lenkwinkel der vorderen, lenkbaren Räder 64 steuert. Außerdem übersendet die Rechnereinrichtung 102 Geschwindigkeitssignale an eine Geschwindigkeitsvorgabeeinrichtung 110, die über eine Variation der Motordrehzahl des Transportfahrzeugs 12, 12' und/oder der Getriebeübersetzung die Geschwindigkeit des Transportfahrzeugs 12, 12' kontrolliert. Außerdem ist die Rechnereinrichtung 102 mit einem permanenten Speicher 120 verbunden.

An Bord der Erntemaschine 10 ist die Rechnereinrichtung 88 mit einer Kontrolleinheit 112 verbunden, die gemeinsam mit den von ihr kontrollierten Aktoren und den mit ihr verbundenen Sensoren die Steueranordnung zur Kontrolle des Überladens des Ernteguts von der Erntemaschine 10 auf den Ladebehälter 18 des Transportfahrzeugs 12 bildet. Die Kontrolleinheit 112 ist mit einer Lenkeinrichtung 114 verbunden, welche den Lenkwinkel der rückwärtigen, lenkbaren Räder 24 steuert. Außerdem übersendet die Kontrolleinheit 112 Geschwindigkeitssignale an eine Geschwindigkeitsvorgabeeinrichtung 116, die über eine Variation der Getriebeübersetzung die Geschwindigkeit des Transportfahrzeugs 12 kontrolliert. Die Kontrolleinheit 112 ist weiterhin mit einem Durchsatzsensor 118, der den Abstand zwischen den Vorpresswalzen im Einzugskanal erfasst, mit einem Sensor zur Erfassung der Position von an einer Teilerspitze des Erntevorsatzes 28 angebrachten Tastbügeln 62, einem permanenten Speicher 122, der Verarbeitungsschaltung 130 und mit den Aktoren 46, 48 und 50 verbunden.

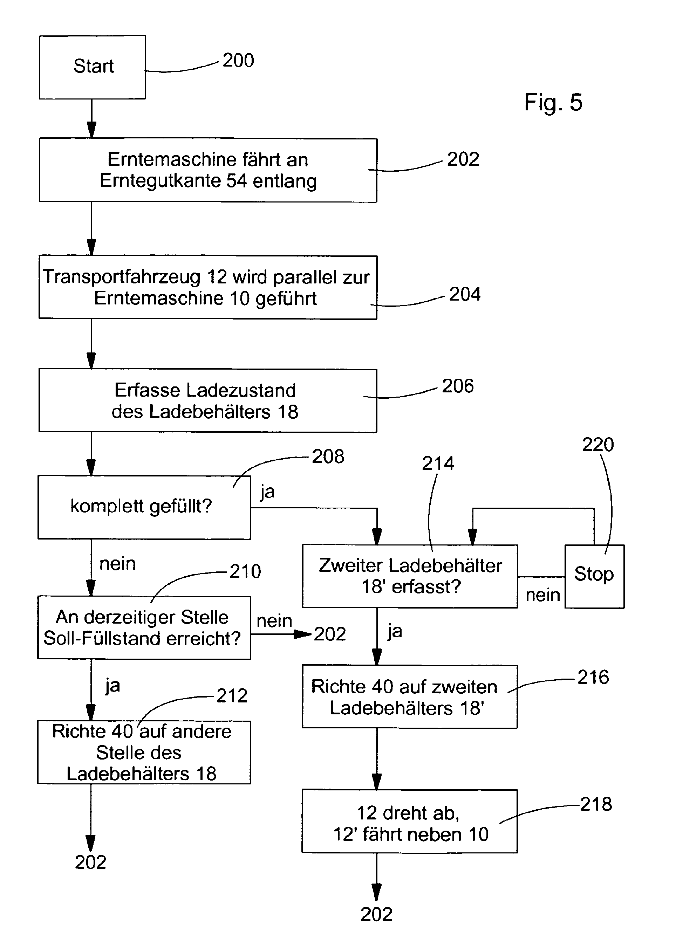

In der Figur 5 ist ein Flussdiagramm dargestellt, nach dem die Kontrolleinheit 112 der Erntemaschine 10 während des Erntebetriebs vorgeht.

Nach dem Start im Schritt 200 folgt der Schritt 202, in dem die Erntemaschine 10 entlang der Erntegutkante 54 gelenkt wird, indem die Kontrolleinheit 112 Lenksignale an die Lenkeinrichtung 114 gibt, die auf den Signalen von der Positionsbestimmungseinrichtung 72 und einer im Speicher 122 abgelegten Karte basieren, die einen für den kommenden Erntevorgang geplanten Weg definiert, oder auf Signalen von den Tastbügeln 62 oder einer Kombination aus beiden Signalen. Alternativ oder zusätzlich wird die Erntegutkante 54 mit einer zwei- oder dreidimensionalen Kamera und einem Bildverarbeitungssystem oder einem Laser- oder Ultraschallsensor oder -scanner erfasst und zur Erzeugung des Lenksignals für die Lenkeinrichtung 114 verwendet. Der Weg der Erntemaschine 10 muss nicht unbedingt schnurgerade verlaufen, sondern kann abhängig von der Form des Felds auch Kurven umfassen. Außerdem sind Wendevorgänge am Feldende vorgesehen.

Die Vortriebsgeschwindigkeit der Erntemaschine 10 kann durch ihren Fahrer vorgegeben werden, oder die Kontrolleinheit 112 verwendet die Durchsatzsignale des Durchsatzsensors 118, um die Geschwindigkeitsvorgabeeinrichtung 116 derart anzusteuern, dass ein gewünschter Durchsatz durch die Erntemaschine 10 erzielt wird.

Außerdem wird im Schritt 204 das Transportfahrzeug 12 parallel zur Erntemaschine 10 geführt, indem die Kontrolleinheit 112 über die Rechnereinrichtung 88 und die Radioantennen 74, 78 Daten hinsichtlich der von Transportfahrzeug 10 anzusteuernden Position an die Rechnereinrichtung 102 übersendet. Die Rechnereinrichtung 102 steuert dann die Lenkeinrichtung 108 und die Geschwindigkeitsvorgabeeinrichtung 110 entsprechend an, indem sie die mit der Positionsbestimmungseinrichtung 76 erfasste Position mit der anzusteuernden Position vergleicht und abhängig vom Ergebnis des Vergleichs geeignete Lenksignale an die Lenkeinrichtung 108 gibt. Dieser Vergleich und die Erzeugung des Lenksignals für die Lenkeinrichtung 108 könnte auch durch die Rechnereinrichtung 88 und/oder die Kontrolleinheit 112 an Bord der Erntemaschine 10 erfolgen, wobei die Positionsdaten von der Positionsbestimmungseinrichtung 76 des Transportfahrzeugs über die Radioantennen 74, 78 auf die Erntemaschine 10 übertragen werden, während die Lenksignale in umgekehrter Richtung zurück auf das Transportfahrzeug 12 übersandt werden. Das Transportfahrzeug 12 folgt der Erntemaschine 10 auch beim Befahren von Kurven und beim Wenden am Feldende.

Im Schritt 206 wird der Ladezustand des Ladebehälters 206 erfasst, wozu die Signale der Verarbeitungsschaltung 130 dienen, die durch hochintegrierte Signale von Durchsatzsensor 118 und/oder Signale von einem Sensor 124 zur Erfassung von Erntegutbestandteilen ergänzt werden. Im Schritt 208 wird dann abgefragt, ob er komplett hinreichend gefüllt ist. Falls das nicht der Fall ist, folgt der Schritt 210, in dem abgefragt wird, ob an der derzeit mit Erntegut beaufschlagten Stelle des Ladebehälters 18 ein gewünschter Soll-Füllstand erreicht ist. Ist das nicht der Fall, folgt wieder der Schritt 202, anderenfalls der Schritt 212, in dem die Austrageinrichtung 40 auf eine andere Stelle des Ladebehälters 18 ausgerichtet wird. Dabei kann eine bestimmte Beladestrategie verwendet werden, wozu auf die Offenbarung der DE 10 2008 002 006 A1 verwiesen sei, deren Offenbarung durch Verweis mit in die vorliegenden Unterlagen aufgenommen wird. Die Signale der Verarbeitungseinrichtung 130 dienen demnach im Schritt 212 zum Ansteuern der Aktoren 46, 48, 52. Zusätzlich oder alternativ wird die Position des Transportfahrzeugs 12 in Vorwärtsrichtung und/oder in seitlicher Richtung gegenüber der Erntemaschine 10 variiert, indem die Kontrolleinheit 112 über die Rechnereinrichtung 88 und die Radioantennen 74, 78 entsprechende Daten hinsichtlich der von Transportfahrzeug 10 anzusteuernden Position an die Rechnereinrichtung 102 übersendet. Dadurch kann der Weg des Ernteguts zwischen dem Abgabeende der Austrageinrichtung 40 und dem Ladebehälter 18 relativ kurz gehalten werden, was die Vorteile hat, dass bei Wind wenig Erntegutverluste entstehen und das Erntegut auf dem Ladebehälter 18 vorverdichtet wird. Auf den Schritt 212 folgt wieder der Schritt 202.

Falls sich im Schritt 208 ergeben hat, dass der Ladebehälter komplett gefüllt ist, folgt der Schritt 214, in dem die Kontrolleinheit 112 die Daten von der Verarbeitungseinheit 130 dahingehend abfragt, ob ein zweiter Ladebehälter 18' darin erfasst wird. Ist das nicht der Fall, folgt der Schritt 220, in dem die Erntemaschine 10 angehalten wird, um auf ein zweites Transportfahrzeug 12' mit einem zweiten Ladebehälter 18' zu warten, und auf den wieder der Schritt 214 folgt. Wird hingegen ein zweiter Ladebehälter 18' erfasst, folgt der Schritt 216, in dem die Austrageinrichtung 40 auf den zweiten Ladebehälter 18' ausgerichtet wird, indem die Aktoren 46, 48, 52 in geeigneter Weise angesteuert werden. Es folgt dann der Schritt 218, in dem das erste Transportfahrzeug 12 abdreht, d. h. verlangsamt wird und dann zum Abladeplatz für das Erntegut fährt, und sobald hinreichend Platz vorhanden ist, das zweite Transportfahrzeug 12' die Position direkt neben der Erntemaschine 10 einnimmt, die vorher das erste Transportfahrzeug 12 hatte. Im Schritt 218 kann der Fahrer des Transportfahrzeugs 12 durch eine von der Kontrolleinheit 112 über die Rechnereinrichtungen 88, 102 an eine optisch oder akustisch arbeitende Informationseinrichtung (nicht gezeigt) veranlasst werden, die Kontrolle über das Transportfahrzeug 12 zu übernehmen und den Platz neben der Erntemaschine 10 zu räumen, um Platz für ein das zweite Transportfahrzeug 12' zu schaffen. Alternativ wird die Lenkeinheit 108 des Transportfahrzeugs 12 veranlasst, letzteres zu verlangsamen und dann seitlich fortzubewegen, worauf hin der Fahrer des Transportfahrzeugs 12 die Kontrolle übernimmt. Das zweite Transportfahrzeug 12' wird durch seinen Fahrer oder selbsttätig über die Rechnereinrichtungen 88, 102 neben der Erntemaschine 10 positioniert.

Falls das erste Transportfahrzeug 12 zwei Anhänger 16, 16' mit je einem Ladebehälter 18, 18' hinter sich herzieht (in den Figuren nicht dargestellt), wird vorzugsweise zunächst der vordere (erste) Ladebehälter gefüllt und anschließend der hintere (zweite) Ladebehälter.

Außerdem wäre es möglich, die Erntemaschine 10 zwischen den Schritten 214 und 216 selbsttätig anzuhalten, um den Transportfahrzeugen 12, 12' einen Positionswechsel zu ermöglichen, und anschließend den Erntebetrieb wieder aufzunehmen.

Es ist anzumerken, dass in einer vereinfachten Ausführungsform der Erfindung der Fahrer der Erntemaschine 10 diese lenkt und ihre Geschwindigkeit vorgibt, während die Fahrer der Transportfahrzeuge 12 diese lenken und ihre Geschwindigkeiten vorgeben. Die Kontrolleinheit 112 kontrolliert dann lediglich die Aktoren 46, 48 und 52 und richtet die Austrageinrichtung 40 bei befülltem ersten Transportbehälter 18 selbsttätig auf den zweiten Transportbehälter 18' aus, basierend auf den Daten der Sensoranordnung 126, 126'.

## Patentansprüche

1. Kombination aus einer Erntemaschine (10), zwei Transportfahrzeugen (12, 12') und einer Steueranordnung zur Kontrolle des Überladens landwirtschaftlichen Ernteguts von der Erntemaschine (10) auf das erste und zweite, jeweils einen Ladebehälter (18, 18') umfassende Transportfahrzeug (12, 12'), wobei:
die Steueranordnung mit einer den Füllstand und/oder die äußeren Konturen des Ladebehälters (18, 18') erfassenden Sensoranordnung (126, 126') verbunden und betreibbar ist, basierend auf den Signalen der Sensoranordnung (126, 126') die Position des Abgabeendes einer Austrageinrichtung (40) gegenüber der Erntemaschine (10) und/oder die Auswurfrichtung der Austrageinrichtung (40) und/oder die Position des ersten Transportfahrzeugs (12) mit dem ersten Ladebehälter (18) gegenüber der Erntemaschine (10) selbsttätig derart zu kontrollieren, dass der erste Ladebehälter (18) sukzessive mit dem Erntegut befüllt wird,
die Sensoranordnung (126, 126') weiterhin eingerichtet ist, die Position eines zweiten Ladebehälters (18') zu erfassen,
die Steueranordnung betreibbar ist, auf eine Erkennung eines insgesamt hinreichend gefüllten ersten Ladebehälters (18) hin die Austrageinrichtung (40) basierend auf den Signalen der Sensoranordnung (126, 126') selbsttätig auf den zweiten Ladebehälter (18') auszurichten,
und die Steueranordnung betreibbar ist, einen hinreichend gefüllten ersten Ladebehälter (18) anhand von Signalen der Sensoranordnung (126, 126') und/oder anhand eines an der Erntemaschine (10) angebrachten Erntegutsensors (118, 124) zur Erfassung von Eigenschaften des Ernteguts zu erkennen,
**dadurch gekennzeichnet, dass** die Steueranordnung betreibbar ist, nach einer Erkennung eines hinreichend gefüllten ersten Ladebehälters (18) die Signale der Sensoranordnung (126, 126') daraufhin zu überprüfen, ob ein zweiter Ladebehälter (18') von der der Sensoranordnung (126, 126') erfasst wird und, wenn das nicht der Fall ist, die Erntemaschine (10) anzuhalten, um auf das zweite Transportfahrzeug (12') mit dem zweiten Ladebehälter (18') zu warten.

2. Kombination nach Anspruch 1, **dadurch gekennzeichnet, dass** der Erntegutsensor (118, 124) zur Erfassung des Durchsatzes und/oder der Masse und/oder von Inhaltsstoffen und/oder der Trockenmasse des Ernteguts ausgelegt ist.

3. Kombination nach Anspruch 1 oder 2, **dadurch gekennzeichnet, dass** die Sensoranordnung (126, 126') einen abbildenden Sensor, insbesondere eine zwei- oder dreidimensional arbeitende Kamera, oder einen zweidimensional abtastenden Entfernungsmesser umfasst.

4. Kombination nach einem der Ansprüche 1 bis 3, **dadurch gekennzeichnet, dass** die Steueranordnung betreibbar ist, die Austrageinrichtung (40) während der Fahrt der Erntemaschine (10) auf den zweiten Ladebehälter (18') auszurichten.

5. Kombination nach einem der Ansprüche 1 bis 3, **dadurch gekennzeichnet, dass** die Steueranordnung betreibbar ist, die Erntemaschine (10) anzuhalten, bevor sie die Austrageinrichtung auf den zweiten Ladebehälter (18') ausrichtet, wobei die Transportfahrzeuge (12, 12') ebenfalls anhalten oder der zweite Ladebehälter (18') die Position einnimmt, die vorher der erste Ladebehälter (18) hatte.

6. Kombination nach einem der Ansprüche 1 bis 5, **dadurch gekennzeichnet, dass** die Steueranordnung betreibbar ist, die Position des ersten oder zweiten Transportfahrzeugs (12, 12') mit dem zweiten Ladebehälter (18') gegenüber der Erntemaschine (10) selbsttätig zu kontrollieren.

7. Kombination nach einem der Ansprüche 1 bis 6, **dadurch gekennzeichnet, dass** die Sensoranordnung (126, 126') von oben her auf die Ladebehälter (18, 18') blickt.

8. Kombination nach einem der Ansprüche 1 bis 7, **dadurch gekennzeichnet, dass** die Sensoranordnung (126, 126') am äußeren Ende der Austrageinrichtung (40) oder an einer separaten Halterung (128) an der Erntemaschine (10) befestigt ist.

9. Verfahren zum Überladen landwirtschaftlichen Ernteguts von einer Erntemaschine (10) auf ein einen Ladebehälter (18, 18') umfassendes Transportfahrzeug (12, 12'), wobei:
eine Steueranordnung basierend auf Signalen von einer den Füllstand und/oder die äußeren Konturen des Ladebehälters erfassenden Sensoranordnung (126, 126') die Position des Abgabeendes einer Austrageinrichtung (40) gegenüber der Erntemaschine (10) und/oder die Auswurfrichtung der Austrageinrichtung (40) und/oder die Position des Transportfahrzeugs (12, 12') mit dem Ladebehälter (18, 18') gegenüber der Erntemaschine (10) selbsttätig derart kontrolliert, dass der Ladebehälter (18, 18') sukzessive mit dem Erntegut befüllt wird,
die Sensoranordnung (126, 126') weiterhin die Position eines zweiten Ladebehälters (18') erfasst und die Steueranordnung auf eine Erkennung eines insgesamt hinreichend gefüllten ersten Ladebehälters (18) hin die Austrageinrichtung (40) basierend auf den Signalen der Sensoranordnung (126, 126') selbsttätig auf den zweiten Ladebehälter (18') ausrichtet,
die Steueranordnung einen hinreichend gefüllten ersten Ladebehälter (18) anhand von Signalen der Sensoranordnung (126, 126') und/oder anhand eines an der Erntemaschine (10) angebrachten Erntegutsensors (118, 124) zur Erfassung von Eigenschaften des Ernteguts erkennt,
**dadurch gekennzeichnet, dass** die Steueranordnung nach einer Erkennung eines hinreichend gefüllten ersten Ladebehälters (18) die Signale der Sensoranordnung (126, 126') daraufhin überprüft, ob ein zweiter Ladebehälter (18') von der der Sensoranordnung (126, 126') erfasst wird und, wenn das nicht der Fall ist, die Erntemaschine (10) anhält, um auf das zweite Transportfahrzeug (12') mit dem zweiten Ladebehälter (18') zu warten.

## Claims

1. Combination of a harvester (10), two transport vehicles (12, 12') and a control assembly for controlling the transfer of agricultural harvested goods from the harvester (10) to the first and second transport vehicles (12, 12') which each comprise a loading container (18, 18'), wherein:
the control device is connected to a sensor assembly (126, 126') which detects the filling level and/or the outer contours of the loading container (18, 18') and can be operated, on the basis of the signals of the sensor assembly (126, 126') so as to monitor automatically the position of the output end of a discharge device (40) with respect to the harvester (10) and/or the ejection direction of the discharge device (40) and/or the position of the first transport vehicle (12) with the first loading container (18) with respect to the harvester (10), in such a way that the first loading container (18) is successively filled with the harvested goods,
the sensor assembly (126, 126') is also configured to detect the position of a second loading container (18'),
the control assembly can be operated to automatically align the discharge device (40) with the second loading container (18') on the basis of the signals of the sensor assembly (126, 126'), in response to the detection of an overall sufficiently filled first loading container (18),
and the control assembly can be operated to detect a sufficiently filled first loading container (18) by reference to signals of the sensor assembly (126, 126') and/or by reference to a harvested goods sensor (118, 124) which is mounted on the harvester (10), for the purpose of detecting properties of the harvested goods,
**characterized in that**, after detection of a sufficiently filled first loading container (18), the control assembly can be operated to check the signals of the sensor assembly (126, 126') to determine whether a second loading container (18') is detected by the sensor assembly (126, 126'), and if this is not the case, to stop the harvester (10) in order to wait for the second transport vehicle (12') with the second loading container (18').

2. Combination according to Claim 1, **characterized in that** the harvested goods sensor (118, 124) is configured to detect the throughput rate and/or the mass and/or the contents and/or the dry mass of the harvested goods.

3. Combination according to Claim 1 or 2, **characterized in that** the sensor assembly (126, 126') comprises an imaging sensor, in particular a camera which operates in a two-dimensional or three-dimensional fashion, or a distance measuring device which scans in a two-dimensional fashion.

4. Combination according to one of Claims 1 to 3, **characterized in that** the control assembly can be operated to orient the discharge device (40) with the second loading container (18') while the harvester (10) is travelling.

5. Combination according to one of Claims 1 to 3, **characterized in that** the control assembly can be operated to stop the harvester (10) before it orients the discharge device with the second loading container (18'), wherein the transport vehicles (12, 12') also stop, or the second loading container (18') assumes the position which the first loading container (18) was in previously.

6. Combination according to one of Claims 1 to 5, **characterized in that** the control assembly can be operated to monitor automatically the position of the first or second transport vehicle (12, 12') with the second loading container (18') with respect to the harvester (10).

7. Combination according to one of Claims 1 to 6, **characterized in that** the sensor assembly (126, 126') looks down onto the loading containers (18, 18') from above.

8. Combination according to one of Claims 1 to 7, **characterized in that** the sensor assembly (126, 126') is attached to the outer end of the discharge device (40) or to a separate mount (128) on the harvester (10).

9. Method for transferring agricultural harvested goods from a harvester (10) to a transport vehicle (12, 12') which comprises a loading container (18, 18'), wherein:
a control assembly automatically monitors, on the basis of signals from a sensor assembly (126, 126') which detects the filling level and/or the outer contours of the loading container, the position of the output end of a discharge device (40) with respect to the harvester (10) and/or the ejection direction of the discharge device (40) and/or the position of the transport vehicle (12, 12') with the loading container (18, 18') with respect to the harvester (10), in such a way that the loading container (18, 18') is successively filled with the harvested goods,
the sensor assembly (126, 126') also detects the position of a second loading container (18') and the control assembly automatically aligns the discharge device (40) with the second loading container (18') on the basis of the signals of the sensor assembly (126, 126'), in response to the detection of an overall sufficiently filled first loading container (18),
the control assembly detects a sufficiently filled first loading container (18) by reference to signals of the sensor assembly (126, 126') and/or by reference to a harvested goods sensor (118, 124) which is mounted on the harvester (10), for the purpose of detecting properties of the harvested goods,
**characterized in that**, after detection of a sufficiently filled first loading container (18), the control assembly checks the signals of the sensor assembly (126, 126') to determine whether a second loading container (18') is detected by the sensor assembly (126, 126'), and if this is not the case, stops the harvester (10) in order to wait for the second transport vehicle (12') with the second loading container (18').

## Revendications

1. Combinaison d'une moissonneuse (10), de deux véhicules de transport (12, 12') et d'un dispositif de commande pour le contrôle du transfert de récoltes agricoles de la moissonneuse (10) au premier et au deuxième véhicule de transport (12, 12') comprenant respectivement un récipient de chargement (18, 18') :
le dispositif de commande étant relié à un dispositif de détection (126, 126') détectant l'état de remplissage et/ou les contours extérieurs du récipient de chargement (18, 18') et pouvant être actionné pour contrôler automatiquement la position de l'extrémité de remise d'un dispositif de déchargement (40) par rapport à la moissonneuse (10) et/ou la direction d'éjection du dispositif de déchargement (40) et/ou la position du premier véhicule de transport (12) pourvu du premier récipient de chargement (18) par rapport à la moissonneuse (10) sur la base des signaux du dispositif de détection (126, 126') de telle sorte que le premier récipient de chargement (18) est rempli successivement avec les récoltes ;
le dispositif de détection (126, 126') étant en outre conçu pour détecter la position d'un deuxième récipient de chargement (18') ;
le dispositif de commande pouvant être actionné pour orienter automatiquement le dispositif de déchargement (40) sur le deuxième récipient de chargement (18') sur la base des signaux du dispositif de détection (126, 126'), en présence d'une reconnaissance d'un premier récipient de chargement (18) dans l'ensemble suffisamment rempli ; et
le dispositif de commande pouvant être actionné pour détecter un premier récipient de chargement (18) suffisamment rempli à l'aide de signaux du dispositif de détection (126, 126') et/ou à l'aide d'un détecteur de récolte (118, 124) placé au niveau de la moissonneuse (10) pour détecter les propriétés de la récolte ;
**caractérisée en ce que** le dispositif de commande peut être actionné, après détection d'un premier récipient de chargement (18) suffisamment rempli, pour contrôler les signaux du dispositif de détection (126, 126') pour savoir si un deuxième récipient de chargement (18') est détecté par le dispositif de détection (126, 126') et si ce n'est pas le cas, pour arrêter la moissonneuse (10) en vue d'attendre l'arrivée du deuxième véhicule de transport (12') pourvu du deuxième récipient de chargement (18').

2. Combinaison selon la revendication 1, **caractérisée en ce que** le détecteur de récolte (118, 124) est conçu pour détecter le débit et/ou la masse et/ou les substances contenues et/ou la masse sèche des récoltes.

3. Combinaison selon la revendication 1 ou 2, **caractérisée en ce que** le dispositif de détection (126, 126') comprend un capteur de représentation d'images, notamment une caméra bi ou tridimensionnelle ou un télémètre bidimensionnel.

4. Combinaison selon l'une quelconque des revendications 1 à 3, **caractérisée en ce que** le dispositif de commande peut être actionné pour orienter le dispositif de déchargement (40) sur le deuxième récipient de chargement (18') pendant l'avancée de la moissonneuse (10).

5. Combinaison selon l'une quelconque des revendications 1 à 3, **caractérisée en ce que** le dispositif de commande peut être actionné pour arrêter la moissonneuse (10) avant qu'elle n'oriente le dispositif de déchargement sur le deuxième récipient de chargement (18'), les véhicules de transport (12, 12') s'arrêtant également ou le deuxième récipient de chargement (18') prenant la position précédemment occupée par le premier récipient de chargement (18).

6. Combinaison selon l'une quelconque des revendications 1 à 5, **caractérisée en ce que** le dispositif de commande peut être actionné pour contrôler automatiquement la position du premier ou du deuxième véhicule de transport (12, 12') pourvu du deuxième récipient de chargement (18') par rapport à la moissonneuse (10).

7. Combinaison selon l'une quelconque des revendications 1 à 6, **caractérisée en ce que** le dispositif de détection (126, 126') est placé de façon à voir par en haut sur le récipient de chargement (18, 18').

8. Combinaison selon l'une quelconque des revendications 1 à 7, **caractérisée en ce que** le dispositif de détection (126, 126') est fixé à l'extrémité extérieure du dispositif de déchargement (40) ou à un support (128) séparé placé sur la moissonneuse (10).

9. Procédé de transfert de récoltes agricoles d'une moissonneuse (10) à un véhicule de transport (12, 12') comprenant un récipient de chargement (18, 18') :
un dispositif de commande contrôlant automatiquement la position de l'extrémité de remise d'un dispositif de déchargement (40) par rapport à la moissonneuse (10) et/ou la direction d'éjection du dispositif de déchargement (40) et/ou la position du véhicule de transport (12, 12') pourvu du récipient de chargement (18, 18') par rapport à la moissonneuse (10) sur la base des signaux d'un dispositif de détection (126, 126') étant relié à un dispositif de détection (126, 126') détectant l'état de remplissage et/ou les contours extérieurs du récipient de chargement de telle sorte que le récipient de chargement (18, 18') est rempli successivement avec la récolte ;
le dispositif de détection (126, 126') détectant en outre la position d'un deuxième récipient de chargement (18') et le dispositif de commande orientant automatiquement le dispositif de déchargement (40) sur le deuxième récipient de chargement (18') sur la base des signaux du dispositif de détection (126, 126'), en présence d'une reconnaissance d'un premier récipient de chargement (18) dans l'ensemble suffisamment rempli ; et
le dispositif de commande détectant un premier récipient de chargement (18) suffisamment rempli à l'aide de signaux du dispositif de détection (126, 126') et/ou à l'aide d'un détecteur de récolte (118, 124) placé au niveau de la moissonneuse (10) pour détecter les propriétés de la récolte ;
**caractérisé en ce que** le dispositif de commande contrôle, après détection d'un premier récipient de chargement (18) suffisamment rempli, les signaux du dispositif de détection (126, 126') pour savoir si un deuxième récipient de chargement (18') est détecté par le dispositif de détection (126, 126') et si ce n'est pas le cas, pour arrêter la moissonneuse (10) en vue d'attendre l'arrivée du deuxième véhicule de transport (12') pourvu du deuxième récipient de chargement (18').
